# EUROPÄISCHE PATENTSCHRIFT

(11) **EP 1 110 379 B1**
(45) Veröffentlichungstag und Bekanntmachung des Hinweises auf die Patenterteilung: **04.12.2002**
(21) Anmeldenummer: 99953642.8
(22) Anmeldetag: 01.09.1999
(51) Int. Cl.: H04N 5/20

(54) **SCHALTUNGSANORDNUNG ZUR STEUERUNG VON LUMINANZSIGNALAMPLITUDEN**
CIRCUIT FOR CONTROLLING LUMINANCE SIGNAL AMPLITUDE
CIRCUIT DE COMMANDE DE L'AMPLITUDE DE SIGNAUX DE LUMINANCE

(30) Priorität: 01.09.1998 DE 19839803
(43) Veröffentlichungstag der Anmeldung: 27.06.2001
(73) Patentinhaber: Micronas Munich GmbH, 81541 München (DE)
(72) Erfinder: NIE, Xiaoning, D-81543 München (DE); WENDEL, Dirk, D-82008 Unterhaching (DE); BRETT, Maik, D-81539 München (DE)
(74) Vertreter: Bickel, Michael
(86) Internationale Anmeldenummer: DE9902726
(87) Internationale Veröffentlichungsnummer: WO00013405

(56) Entgegenhaltungen:
- EP-A- 0 547 882
- EP-A- 0 735 751
- US-A- 5 721 559

## Beschreibung

Die Erfindung betrifft eine Schaltungsanordnung zur Steuerung von Luminanzsignalamplituden zur Anwendung in einem Videosystem.

Video- und Fernsehsysteme weisen im allgemeinen eine automatische Luminanzregelung (Helligkeitsregelung) auf, mit der die mittlere Gesamthelligkeit in Abhängigkeit von den hellsten Stellen eines Bildes geregelt wird. Dies dient vor allem dem Schutz der Bildröhre, weil der Strom des Bildstrahles hierdurch begrenzt ist.

Bei Bild-in-Bild-Systemen, in denen zum Beispiel auf einem Fernseh-Bildschirm zwei Bilder gleichzeitig dargestellt werden, indem ein kleineres Nebenbild in ein Hauptbild eingeblendet wird, entsteht dabei jedoch der störende Effekt, daß bei zu hellem Nebenbild die Gesamthelligkeit auch des Hauptbildes vermindert wird, obwohl dies eigentlich gar nicht erforderlich wäre. Die Bilddarstellung ist zwar an die Helligkeit des Nebenbildes angepaßt, für das Hauptbild jedoch insgesamt zu dunkel.

Der Erfindung liegt die Aufgabe zugrunde, eine einfache Schaltungsanordnung zur Steuerung der Luminanzsignalamplituden in Videosystemen zu schaffen, mit der die Helligkeit des darzustellenden Bildes regelbar ist. Insbesondere soll mit der zu findenden Schaltungsanordnung bei Bild-in-Bildsystemen die Helligkeit eines Hauptbildes weitgehend unabhängig und unbeeinflußt von der Helligkeit eines in das hauptbild einzublendenden Nebenbildes bzw. kleinbildes geregelt werden können.

Aus der Druckschrift EP 0 547 882 Al ist eine Schaltungsanordnung zur Steuerung von Luminanzsignalamplituden zur Anwendung in einer Videokamera nach dem Oberbegriff des Anspruchs 1 bekannt. In dieser Druckschrift wird vorgeschlagen, über einen bestimmten Bereich eines Videosignals die Helligkeit einzelner Bildpunkte (Pixel) des Videosignals mit einem vorgegebenen Helligkeitsschwellenwert zu vergleichen und davon abhängig einen Auf/Ab-Zähler anzusteuern, so daß der Zählerstand des Zählers darüber Auskunft gibt, wie viele Bildpunkte heller bzw. dunkler als der vorgegebene Helligkeitsschwellenwert waren. Abhängig von dem Zählerstand des Zählers können in der Videokamera dann bestimmte Einstellungen vorgenommen werden, um die Luminanzsignalamplitude des darzustellenden Bilds entsprechend anzupassen.

Der vorliegenden Erfindung liegt die Aufgabe zugrunde, eine einfache Schaltungsanordnung zur Steuerung der Luminanzsignalamplitude in Videosystemen zu schaffen, mit der die Helligkeit des darzustellenden Bildes regelbar ist. Insbesondere soll mit Hilfe der erfindungsgemäßen Schaltungsanordnuhg bei Bild-in-Bild-Systemen die Helligkeit eines Hauptbildes weitgehend unabhängig und unbeeinflußt von der Helligkeit eines in das Hauptbild einzublendenden Nebenbildes bzw. Kleinbildes geregelt werden können.

Diese Aufgabe wird erfindungsgemäß durch eine Schaltungsanordnung mit den Merkmalen des Anspruchs 1 gelöst.

Die Erfindung beruht insbesondere auf der Erkenntnis, daß das auf einem Bildschirm dargestellte Bild dann zu hell dargestellt ist bzw. zu hell für einen Betrachter empfunden wird, wenn mehr als eine bestimmte Anzahl von Pixeln einen Luminanzwert haben, der größer ist, als ein vorgegebener Spitzenwert und wenn in mehr als einer bestimmten Anzahl von Zeilen in einem Bild und in mehr als einer bestimmten Anzahl von aufeinanderfolgenden Bildern mit einer solchen Anzahl von Zeilen diese Bedingung erfüllt ist.

Ein besonderer Vorteil dieser Lösung besteht darin, daß die Schaltung in digitaler Form und als Teil der (digitalen) Bild-in-Bild-Baugruppe realisiert werden kann. Der erforderliche Mehraufwand ist somit sehr gering.

Die Unteransprüche haben vorteilhafte Weiterbildungen der Erfindung zum Inhalt.

Danach kann die erste Einrichtung einen ersten Vergleicher zum Vergleichen des Luminanzwertes eines Pixels mit dem Luminanz-Schwellwert aufweisen, wobei der erste Vergleicher den ersten Zähler beaufschlagt.

Ferner kann die erste Einrichtung einen zweiten Vergleicher zum Vergleichen des Zählerstandes des ersten Zählers mit dem Pixelzahl-Schwellwert aufweisen, wobei der zweite Vergleicher den zweiten Zähler beaufschlagt.

Weiterhin kann die erste Einrichtung einen dritten Vergleicher zum Vergleichen des Zählerstandes des zweiten Zählers mit dem Zeilenzahl-Schwellwert aufweisen, wobei der dritte Vergleicher den dritten Zähler in der Weise beaufschlagt, daß dessen Stand um den Wert 1 erhöht wird, wenn der Stand des zweiten Zählers den Zeilenzahl-Schwellwert übersteigt, und um den Wert 1 vermindert wird, wenn er unter diesem Schwellwert liegt.

Die zweite Einrichtung umfaßt vorzugsweise einen vierten Vergleicher und eine Einheit zur Erzeugung eines inkremental erhöhten oder verminderten Luminanzwertes, wenn der Zählerstand des dritten Zählers über einem ersten Grenzwert FLDO bzw. unter einem zweiten Grenzwert FLDU liegt, wobei insbesondere der erste Grenzwert FLDO den Wert +2 und der zweite Grenzwert FLDU negativ sein kann.

Der Luminanz-Schwellwert und die beiden Grenzwerte FLDO und FLDU sind vorzugsweise über einen Bus einstellbar, so daß eine optimale Anpassung an das TV-System möglich ist.

Weitere Einzelheiten, Merkmale und Vorteile der Erfindung ergeben sich aus der folgenden Beschreibung einer bevorzugten Ausführungsform anhand der Zeichnung. Es zeigt:

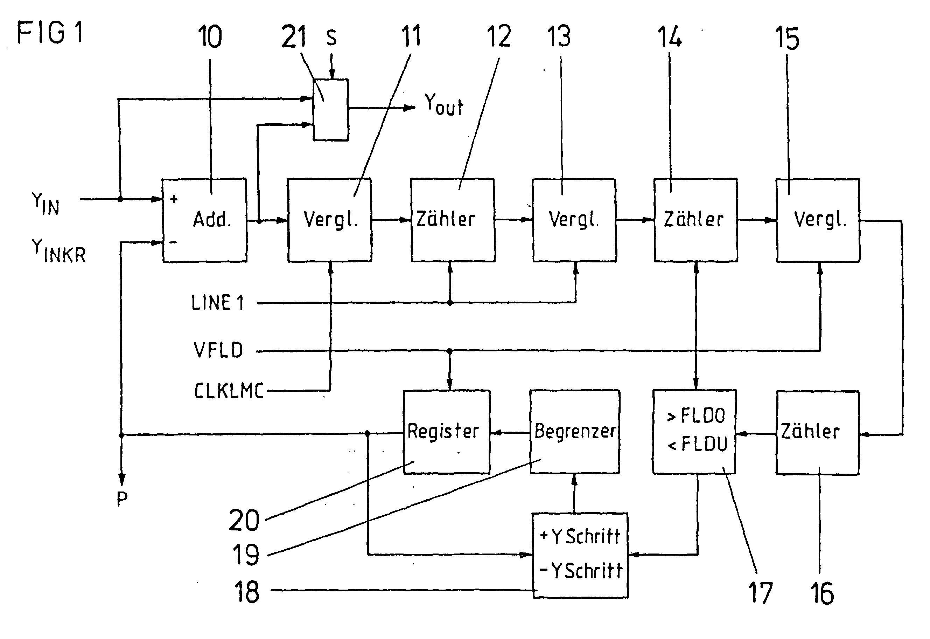

- Fig.1: ein schematisches Blockschaltbild einer solchen bevorzugten Ausführungsform der Erfindung.

Die Schaltungsanordnung umfaßt einen Addierer 10, an dessen erstem Eingang die Luminanzsignale der Bildpixel Y_{IN} und an dessen invertierendem zweiten Eingang ein inkrementaler Luminanzwert Y_{INKR} anliegt.

Der Ausgang des Addierers ist mit einem ersten Vergleicher 11 zum Vergleichen des Luminanzwertes eines Pixels mit einem Luminanz-Schwellwert (7-Bit-Spitzenwert) verbunden, der über einen Bus (I²C-Bus, nicht dargestellt) einstellbar ist. An dem ersten Vergleicher 11 liegt ferner ein Taktsignal CLKLMC an, das dem Eingangssignal Y_{IN} angepaßt ist.

Der Ausgang des ersten Vergleichers 11 ist mit einem ersten Zähler 12 verbunden, dessen Zählerstand durch den Vergleicher um den Wert 1 erhöht wird, wenn der Luminanzwert eines Pixels den Luminanz-Schwellwert übersteigt.

Der Stand des ersten Zählers 12 wird von einem zweiten Vergleicher 13 ausgewertet, der den Stand eines nachgeschalteten zweiten Zählers 14 um den Wert 1 erhöht, wenn der Stand des ersten Zählers 12 einen Schwellwert der Pixelanzahl übersteigt, das heißt wenn in einer Zeile mehr als 64 Pixel vorhanden sind, deren Luminanzwert den Luminanz-Schwellwert überschreitet.

Der erste Zähler 12 sowie der zweite Vergleicher 13 werden durch ein Signal LINE1 am Ende jeder aktiven Zeile zurückgesetzt bzw. ausgeführt.

Der Stand des zweiten Zählers 14 gibt somit die Anzahl von Zeilen in einem Bild an, in denen die Luminanzwerte von mehr als 64 Pixeln den Luminanz-Schwellwert übersteigen. Diese Zeilenanzahl wird mit einem dritten Vergleicher 15 ausgewertet, der einen nachgeschalteten dritten (Bild-) Zähler 16 um den Wert 1 erhöht, wenn die Anzahl von Zeilen den Wert 16 (Zeilenzahl-Schwellwert) übersteigt, und um den Wert 1 vermindert, wenn die Anzahl von Zeilen geringer ist, als der Zeilenzahl-Schwellwert.

Mit einem vierten Vergleicher 17 wird schließlich festgestellt, ob diese Anzahl größer als ein erster Grenzwert FLDO (erstes Kriterium) oder kleiner als ein zweiter Grenzwert FLDU (zweites Kriterium) ist. Der erste Grenzwert FLDO ist dabei im allgemeinen unterschiedlich zum zweiten Grenzwert FLDU. Der Grenzwert FLDO ist über einen Bus (I²C-Bus) einstellbar.

Sofern der Stand des dritten Zählers 16 das erste Kriterium erfüllt, wird mit einer Einheit 18 der inkrementale Luminanzwert vergrößert. Wenn der Zählerstand hingegen das zweite Kriterium erfüllt, wird der inkrementale Luminanzwert verkleinert. Das Ausgangssignal der Einheit 18 wird über einen Begrenzer 19 und ein Register 20 zu der Einheit 18 rückgekoppelt und außerdem zu dem zweiten Eingang des Addierers 10 geführt. Mit dem Begrenzer 19 wird verhindert, daß der inkrementale Luminanzwert kleiner als 0 oder größer als fest vorgegebner Wert. Die Schrittweite Y_{SCHRITT} der inkrementalen Erhöhung bzw. Verminderung des Luminanzwertes ist eine positive ganze Zahl.

Der zweite Zähler 14, der dritte Vergleicher 15, der vierte Vergleicher 17 sowie das Register 20 werden mit einem Signal VFLD am Ende jedes Bildes (bzw. Halbbildes im interlaced-Betrieb) zurückgesetzt bzw. ausgeführt.

Der erste Zähler 12 (Pixelzähler) und der zweite Zähler 14 (Zeilenzähler) arbeiten vorzeichenlos, während der dritte Zähler (Bild- bzw. Halbbildzähler) von -N bis N-1 arbeitet, wobei N eine positive natürliche Zahl ist.

Mit einem Schalter 21, der mit einem Schaltsignal S betätigbar ist und dem einerseits das an dem Addierer 10 anliegende unkorrigierte Luminanzsignal Y_{IN} und andererseits das am Ausgang des Addierers anliegende korrigierte Luminanzsignal zugeführt wird, kann die Schaltungsanordnung wahlweise überbrückt oder in den Luminanzsignalzug eingekoppelt werden. In Abhängigkeit von der mit dem Schaltsignal gewählten Schaltstellung liegt am Ausgang des Schalters 21 das korrigierte oder unkorrigierte Luminanzsignal Y_{OUT} an, das der weiteren, allgemein bekannten Signalverarbeitung zugeführt wird.

Ergänzend ist noch anzumerken, daß das Ausgangssignal des Registers 20 fakultativ zum Anzeigen der Höhe der Helligkeitsreduktion ausgenutzt werden kann. Der hierfür erforderliche Signalabgriffspunkt ist in der Figur mit P bezeichnet. Ein solcher Abgriff ist z.B. zum Anpassen der Farbsättigung an die reduzierte Luminanz von Vorteil.

## Patentansprüche

1. Schaltungsanordnung zur Steuerung der Luminanzsignalamplituden zur Anwendung in einem Videosystem,
mit einer ersten Einrichtung (12, 14, 16) zum Bestimmen der Helligkeit eines Bildes nach Maßgabe von eine definierte Helligkeitsschwelle über- oder unterschreitenden Bildpunkten (Pixel) in aufeinanderfolgenden Bildern, und
mit einer zweiten Einrichtung (10, 18, 19, 20) zur inkrementalen Erhöhung oder Verminderung der Luminanzsignalamplitude des darzustellenden Bildes,
**dadurch gekennzeichnet, daß**
die erste Einrichtung (12, 14, 16) aufweist:
- einen ersten Zähler (12) zum Zählen von Pixeln in einer Zeile, die einen vorgegebenen Luminanz-Schwellwert übersteigen,
- einen zweiten Zähler (14) zum Zählen von Zeilen in einem Bild, in denen der Stand des ersten Zählers einen Pixelzahl-Schwellwert überschreitet, sowie
- einen dritten Zähler (16) zum Zählen von Bildern, in denen der Stand des zweiten Zählers einen Zeilenzahl-Schwellwert überschreitet,
- wobei die zweite Einrichtung (10, 18, 19, 20) zur inkrementalen Erhöhung oder Verminderung der Luminanzsignalamplitude vorgesehen ist, wenn der Stand des dritten Zählers (16) einen Bildzahl-Schwellwert unter- bzw. überschreitet, bis, ausgehend von der in der ersten Einrichtung bestimmten Helligkeit des Bildes, die vorgegebene Helligkeitsschwelle mindestens annähernd erreicht ist.

2. Schaltungsanordnung nach Anspruch 1,
**dadurch gekennzeichnet, daß**
die erste Einrichtung einen ersten Vergleicher (11) zum Vergleichen des Luminanzwertes eines Pixels mit dem Luminanz-Schwellwert aufweist, wobei der erste Vergleicher den ersten Zähler (12) beaufschlagt.

3. Schaltungsanordnung nach einem der Ansprüche 1 oder 2,
**dadurch gekennzeichnet, daß**
der Luminanz-Schwellwert über einen Bus einstellbar ist.

4. Schaltungsanordnung nach einem der Ansprüche 2 oder 3,
**dadurch gekennzeichnet, daß**
die erste Einrichtung einen zweiten Vergleicher (13) zum Vergleichen des Zählerstandes des ersten Zählers (12) mit dem Pixelzahl-Schwellwert aufweist, wobei der zweite Vergleicher den zweiten Zähler (14) beaufschlagt.

5. Schaltungsanordnung nach Anspruch 4,
**dadurch gekennzeichnet, daß**
der Pixelzahl-Schwellwert über einen Bus einstellbar ist.

6. Schaltungsanordnung nach einem der Ansprüche 2-5,
**dadurch gekennzeichnet, daß**
die erste Einrichtung einen dritten Vergleicher (15) zum Vergleichen des Zählerstandes des zweiten Zählers (14) mit dem Zeilenzahl-Schwellwert aufweist, wobei der dritte Vergleicher den dritten Zähler (16) in der Weise beaufschlagt, daß dessen Stand um den Wert 1 erhöht wird, wenn der Stand des zweiten Zählers (14) den Zeilenzahl-Schwellwert übersteigt und um den Wert 1 vermindert wird, wenn er unter diesem Schwellwert liegt.

7. Schaltungsanordnung nach Anspruch 6,
**dadurch gekennzeichnet, daß**
der Zeilenzahl-Schwellwert über einen Bus einstellbar ist.

8. Schaltungsanordnung nach einem der Ansprüche 2-7,
**dadurch gekennzeichnet, daß**
die zweite Einrichtung einen vierten Vergleicher (17) und eine Einheit (18) zur Erzeugung von inkremental erhöhten oder verminderten Luminanzwerten aufweist, wenn der Zählerstand des dritten Zählers (16) über einem ersten Grenzwert FLDO bzw. unter einem zweiten Grenzwert FLDU liegt.

9. Schaltungsanordnung nach Anspruch 8,
**dadurch gekennzeichnet, daß**
der erste Grenzwert FLDO und/oder der zweite Grenzwert FLDU über einen Bus einstellbar ist.

10. Schaltungsanordnung nach einem der Ansprüche 8 oder 9, **gekennzeichnet durch**
einen Begrenzer (19), der an den Ausgang der Einheit (18) zur Erzeugung eines inkremental erhöhten oder verminderten Luminazwertes angeschlossen ist, zur Begrenzung des inkrementalen Luminanzwertes auf einen Wert zwischen 0 und einem positiven Integerwert.

11. Schaltungsanordnung nach einem der Ansprüche 2-10,
**dadurch gekennzeichnet, daß**
die zweite Einrichtung einen Addierer (10) umfaßt, an dessen Eingängen ein unkorrigiertes Luminanzsignal Y_{IN} und als Stellgröße der inkrementale Luminanzwert Y_{INKR} anliegt, und dessen Ausgang mit dem ersten Vergleicher (11) verbunden ist.

12. Schaltungsanordnung nach einem der vorhergehenden Ansprüche,
**dadurch gekennzeichnet, daß**
sie als Teil eines integrierten Bild-im-Bild-Schaltkreises realisiert ist.

13. Schaltungsanordnung nach einem der vorhergehenden Ansprüche,
**dadurch gekennzeichnet, daß**
der erste Zähler (12) ein vorzeichenloser Zähler ist.

14. Schaltungsanordnung nach einem der vorhergehenden Ansprüche,
**dadurch gekennzeichnet, daß**
der zweite zähler (14) ein vorzeichenloser Zähler ist.

15. Schaltungsanordnung nach einem der vorhergehenden Ansprüche,
**dadurch gekennzeichnet, daß**
der dritte Zähler (16) ein Zähler zwischen -N und N-1 ist.

## Claims

1. A circuit configuration for controlling the luminance signal amplitudes for use in a video system,
having a first device (12, 14, 16) for determining the brightness of a picture in accordance with picture elements (pixels) in consecutive pictures which exceed or fall short of a defined brightness threshold, and
having a second device (10, 18, 19, 20) for incrementally increasing or reducing the luminance signal amplitude of the picture to be represented,
**characterised in that** the first device (12, 14, 16) comprises:
- a first counter (12) for counting pixels in a line, which exceed a predetermined luminance threshold value,
- a second counter (14) for counting lines in a picture, in which the reading of the first counter exceeds a pixel number threshold value, and also
- a third counter (16) for counting pictures in which the reading of the second counter exceeds a line number threshold value,
- wherein the second device (10, 18, 19, 20) is provided incrementally to increase or decrease the luminance signal amplitude if the reading of the third counter (16) falls short of or exceeds a picture number threshold value until, proceeding from the brightness of the image determined in the first device, the predetermined brightness threshold is at least approximately reached.

2. A circuit configuration according to Claim 1,
**characterised in that** the first device comprises a first comparator (11) for comparing a luminance value of a pixel with the luminance threshold value, with the first comparator acting on the first counter (12).

3. A circuit configuration according to one of Claims 1 or 2,
**characterised in that** the luminance threshold value can be set via a bus.

4. A circuit configuration according to one of Claims 2 or 3,
**characterised in that** the first device comprises a second comparator (13) for comparing the counter reading of the first counter (12) with the pixel number threshold value, with the second comparator acting on the second counter (14).

5. A circuit configuration according to Claim 4,
**characterised in that** the pixel number threshold value can be set via a bus.

6. A circuit configuration according to one of Claims 2 - 5,
**characterised in that** the first device comprises a third comparator (15) for comparing the counter reading of the second counter (14) with the line number threshold value, with the third comparator acting on the third counter (16) so that its reading is increased by the number 1 when the reading of the second counter (14) exceeds the line number threshold value, and is lowered by the value 1 when it lies beneath this threshold value.

7. A circuit configuration according to Claim 6,
**characterised in that** the line number threshold value can be set via a bus.

8. A circuit configuration according to one of Claims 2 - 7,
**characterised in that** the second device comprises a fourth comparator (17) and a unit (18) for generating incrementally increased or reduced luminance values when the counter reading of the third counter (16) lies above a first limit value FLDO or beneath a second limit value FLDU.

9. A circuit configuration according to Claim 8,
**characterised in that** the first limit value FLDO and/or the second limit value FLDU can be set via a bus.

10. A circuit configuration according to one of Claims 8 or 9,
**characterised by** a limiter circuit (19), which is connected to the output of the unit (18) for the generation of an incrementally increased or decreased luminance value, for limiting the incremental luminance value to a value of between 0 and a positive integer value.

11. A circuit configuration according to one of Claims 2 - 10,
**characterised in that** the second device comprises an adder (10), at the inputs of which there is an uncorrected luminance signal Y_{IN} and there is the incremental luminance value Y_{INCR} as the control variable, and the output of which is connected to the first comparator (11).

12. A circuit configuration according to one of the preceding Claims,
**characterised in that** it is realised as a part of an integrated picture-in-picture circuit.

13. A circuit configuration according to one of the preceding Claims,
**characterised in that** the first counter (12) is an unsigned counter.

14. A circuit configuration according to one of the preceding Claims,
**characterised in that** the second counter (14) is an unsigned counter.

15. A circuit configuration according to one of the preceding Claims,
**characterised in that** the third counter (16) is a counter between -N and N-1.

## Revendications

1. Circuit de commande de l'amplitude de signaux de luminance pour utilisation dans un système vidéo, comprenant :
- un premier système (12, 14, 16) pour déterminer la brillance d'une image par la mesure, dans des images successives de points d'image (pixel) dont la brillance se situe au-dessus ou au-dessous d'un certain seuil,
- un second système (10, 18, 19, 20) pour augmenter ou diminuer de manière incrémentielle l'amplitude du signal de luminance de l'image à représenter,
**caractérisé en ce que** le premier système (12, 14, 16) comporte
- un premier compteur (12) pour compter les pixels qui, dans une ligne, dépassent la valeur donnée de seuil de luminance,
- un deuxième compteur (14) pour compter, dans une image, les lignes dans lesquelles l'état du premier compteur dépasse une valeur de seuil du nombre des pixels,
- un troisième compteur (16) pour compter les images dans lesquelles l'état du deuxième compteur dépose une valeur de seuil du nombre de lignes,
tandis que le second système (10, 18, 19, 20) est prévu pour augmenter ou diminuer de manière incrémentielle l'amplitude du signal de luminance, quand l'état du troisième compteur (16) passe au-dessus ou au-dessous d'une valeur de seuil du nombre d'images, jusqu'à ce que, en partant de la brillance de l'image définie dans le premier système, le seuil de brillance donné à l'avance soit approximativement atteint.

2. Circuit selon la revendication 1,
**caractérisé en ce que**
le premier système comprend un comparateur (11) pour comparer la valeur de luminance d'un pixel à la valeur de seuil de luminance, ce premier comparateur agissant sur le premier compteur (12).

3. Circuit selon l'une quelconque des revendications 1 ou 2,
**caractérisé en ce que**
la valeur de seuil de luminance peut être réglée par un bus.

4. Circuit selon l'une quelconque des revendications 2 ou 3,
**caractérisé en ce que**
le premier système comprend un deuxième comparateur (13) pour comparer l'état du compteur du premier compteur (12) à la valeur de seuil du nombre de pixels, ce second comparateur agissant sur le second compteur (14).

5. Circuit selon la revendication 4,
**caractérisé en ce que**
la valeur de seuil du nombre de pixels peut être réglée par un bus.

6. Circuit selon l'une quelconque des revendications 2 à 5,
**caractérisé en ce que**
le premier système comprend un troisième comparateur (15) pour comparer l'état de comptage du second compteur (14) à la valeur de seuil du nombre de lignes, ce troisième comparateur agissant sur le troisième compteur (16) de manière que l'état de celui-ci est augmenté de la valeur 1 si l'état du deuxième compteur (14) dépasse la valeur de seuil du nombre des lignes, et diminué de la valeur 1 si cet état est en dessous de cette valeur de seuil.

7. Circuit selon la revendication 6,
**caractérisé en ce que**
la valeur de seuil du nombre de lignes peut être réglée par un bus.

8. Circuit selon l'une quelconque des revendications 2 à 7,
**caractérisé en ce que**
le second système comprend un quatrième comparateur (17) et une unité (18) pour obtenir des valeurs de luminance augmentées ou diminuées de manière incrémentielle, quand l'état de comptage du troisième compteur (16) se trouve au-dessus d'une première valeur limite FLDO ou au-dessous d'une seconde valeur limite FLDU.

9. Circuit selon la revendication 8,
**caractérisé en ce que**
la première valeur limite FLDU et/ou la seconde valeur limite peut être réglée par un bus.

10. Circuit selon l'une quelconque des revendications 8 ou 9,
**caractérisé en ce qu'**
un limiteur (19) est raccordé à la sortie de l'unité (18) chargée d'augmenter ou de diminuer de manière incrémentielle la valeur de luminance, pour limiter la valeur de luminance incrémentielle à une valeur comprise entre 0 et une valeur positive.

11. Circuit selon l'une quelconque des revendications 2 à 10,
**caractérisé en ce que**
le second système comprend un additionneur (10) aux entrées duquel sont appliqués un signal de luminance Y_{IN} non corrigé et, en tant que grandeur de réglage, la valeur de luminance incrémentielle Y_{INKR}, et dont la sortie est reliée à un premier comparateur (11).

12. Circuit selon l'une quelconque des revendications précédentes,
**caractérisé en ce que**
ce circuit est une partie d'un circuit intégré de commutation image dans l'image.

13. Circuit selon l'une quelconque des revendications précédentes,
**caractérisé en ce que**
le premier compteur (12) est un compteur sans signe.

14. Circuit selon l'une quelconque des revendications précédentes,
**caractérisé en ce que**
le deuxième compteur (14) est un compteur sans signe.

15. Circuit selon l'une quelconque des revendications précédentes,
**caractérisé en ce que**
le troisième compteur (16) est un compteur entre -N et N-1.
